# EUROPÄISCHE PATENTSCHRIFT

(11) **EP 4 410 101 B1**
(45) Veröffentlichungstag und Bekanntmachung des Hinweises auf die Patenterteilung: **10.09.2025**
(21) Anmeldenummer: 24152405.7
(22) Anmeldetag: 17.01.2024
(51) Int. Cl.: A22C 5/00, A23J 1/02, A23P 10/00, A23J 3/04, A23L 13/60

(54) **VORRICHTUNG UND VERFAHREN ZUR MECHANISCHEN DURCHMISCHUNG VON FLEISCHWAREN**
DEVICE AND METHOD FOR MECHANICALLY MIXING MEAT PRODUCTS
DISPOSITIF ET PROCÉDÉ POUR MÉLANGER MÉCANIQUEMENT DES PRODUITS CARNÉS

(30) Priorität: 31.01.2023 DE 102023102322
(43) Veröffentlichungstag der Anmeldung: 07.08.2024
(73) Patentinhaber: Eberhardt GmbH, 91586 Lichtenau (DE)
(72) Erfinder: Eberhardt, Kevin, 91623 Sachsen b. Ansbach (DE)
(74) Vertreter: Grünecker Patent- und Rechtsanwälte PartG mbB

(56) Entgegenhaltungen:
- EP-A1- 1 508 365
- AT-B- 324 875

## Beschreibung

Die Erfindung bezieht sich auf eine Vorrichtung zur Erzeugung von Eiweißaufschluss an Fleischgut gemäß Anspruch 1 sowie auf ein dementsprechendes Verfahren gemäß Anspruch 13.

Herkömmlicherweise werden Fleischstücke bzw. geschnetzeltes Fleischgut, insbesondere Fleischstücke, die zur Herstellung von Formfleisch vorgesehen sind, in eine Mischtrommel eines Tumblers gefüllt, damit sich durch langsames Rotieren der Mischtrommel Eiweißaufschluss an der Oberfläche der durchmischten Fleischstücke ausbildet. Der Eiweißaufschluss bildet einen klebrigen Film an der Oberfläche der Fleischstücke aus und kann als natürliche Bindungsstärke dafür genutzt werden, dass sich die Fleischstücke bei der Herstellung von Formfleisch besser aneinanderschmiegen und ohne Lufteinschlüsse miteinander verbinden lassen. Bis sich allerdings beim Einsatz herkömmlicher Tumbler am kompletten Füllgut Eiweißaufschluss ausgebildet, können Stunden vergehen, da deren Mischtrommeln, insbesondere aufgrund deren Größe, lediglich mit wenigen Umdrehungen pro Minute angetrieben wird, beispielsweise mit 30 U/min. Dieser bekannte Durchmischungsprozess ist daher sehr zeitintensiv sowie dementsprechend energieaufwändig.

Hinzu kommt, dass dafür eingesetzte Tumbler zur Erzeugung eines gewünschten Durchsatzvolumens an Fleischstücken mit Eiweißaufschluss ein relativ großes Trommelvolumen haben und deshalb viel Platz beanspruchen. Durch die großen Trommeln kommt eine Fallhöhe zustande, aus welcher die Fleischstücke zum Bilden des Eiweißaufschlusses intermittierend auf den Trommelboden herunterfallen. Durch den Aufprall kann am Fleischgut Eiweißaufschluss erzeugt werden. Allerdings ergibt sich damit lediglich eine diskontinuierliche Kräfteeinwirkung auf das Fleischgut, sodass es notwendig ist, die Trommeln stundenlang zu drehen, um gleichmäßig Eiweißaufschluss am gesamten Fleischgut zu erreichen. Dadurch, dass herkömmliche Tumbleranlagen vornehmlich mit einer einzigen Öffnung zum Befüllen und Entladen von Fleischgut vorliegen, bedarf es außerdem einer Unterbrechung des Durchmischungsvorgangs bei einem Chargenwechsel, was ebenfalls dazu beiträgt, dass der Betrieb sogenannter Tumbler sehr zeitintensiv ist und zu erhöhten Energiekosten führt.

AT 324 875 B offenbart eine Vorrichtung zum Massieren von Fleisch mit einer feststehenden Trommel und einer darin drehbar gelagerten, mit Massierschaufeln versehenen Welle

EP 1 508 365 A1 offenbart eine Vorrichtung mit einem Gehäuse und darin drehbar gelagertem Mischwerkzeug.

Aufgabe der Erfindung ist es, eine Vorrichtung sowie ein Verfahren zum Erzeugen von Eiweißaufschluss an Fleischgut mit einer vorteilhaften Energiebilanz sowie einer verbesserten Durchsatzrate zur Verfügung zu stellen.

Diese Aufgabe wird gelöst mittels einer Vorrichtung gemäß Anspruch 1 sowie anhand eines Verfahrens zum Erzeugen von Eiweißaufschluss an Fleischgut gemäß Anspruch 13.

Vorteilhafte Weiterbildungen der Erfindung sind durch die jeweiligen Gegenstände der Unteransprüche gegeben.

Die Erfindung betrifft eine Vorrichtung mit mindestens einem Werkzeug zur Erzeugung von Eiweißaufschluss an Fleischgut, wobei das Werkzeug eine Durchmischungskammer für Fleischgut ausbildet. Erfindungsgemäß ist vorgesehen, dass die Durchmischungskammer gegenüberliegende, relativ zueinander rotierbare Kammerwände zum Steuern von auf dazwischen befindliches Fleischgut ausgeübten Kräften aufweist.

Anhand der relativ zueinander rotierbaren Kammerwände der Durchmischungskammer kann das dazwischen aufgenommene Fleischgut entlang dessen Oberfläche gleichmäßig und während der gesamten Prozessdauer durchgehend durchgeknetet werden. Dies beruht darauf, dass zwischen den Kammerwänden ein kontinuierlicher, aus Press- und Gegenpresskräften resultierender Kräfteeintrag von den gegenüberliegenden Kammerwänden auf das Fleischgut einwirkt, sodass es daran innerhalb kurzer Zeit zur Ausbildung eines gleichmäßigen Oberflächenfilms an Eiweißaufschluss kommt. Der Kräfteeintrag auf das Fleischgut ist besonders effizient, wenn ein von der Durchmischungskammer gebildetes Aufnahmevolumen im Wesentlichen vollständig mit Fleischgut befüllt ist.

Die einander zugewandten, rotierbaren Kammerwände können bei der Erfindung selbst als Gegendruckwerkzeugteile mit vergrößerten Werkzeugoberflächen genutzt werden, um auf das Fleischgut Kräfte auszuüben. Dies führt dazu, dass die Summe der damit auf das Fleischgut einwirkenden Kräfte innerhalb kurzer Zeit derart groß ist, dass es daran mittels geringem Energieeinsatz zu der gewünschten Eiweißaufschlusserzeugung kommt.

Als Fleischgut kommt bspw. geschnetzeltes bzw. gestückeltes Fleischgut in Frage. Alternativ dazu ist es denkbar, dass Hackfleisch als Fleischgut zum Einsatz kommt, welches innerhalb der Durchmischungskammer behandelt wird, um daran Eiweißaufschluss auszubilden. Des Weiteren wäre es denkbar, dass die Durchmischungskammer zum Herstellen einer homogenen Mischung aus zugeführtem Hackfleisch und ferner zugeführten Gewürzen eingesetzt wird. Die Durchmischungskammer der erfindungsgemäßen Vorrichtung lässt sich, was die Art des Fleischguts betrifft, vielseitig einsetzen. Vorzugsweise wird die erfindungsgemäße Vorrichtung jedoch zur Erzeugung von Eiweißaufschluss an Fleischstücken eingesetzt.

Eine Variante der Erfindung sieht vor, dass die Durchmischungskammer relativ zueinander koaxial rotierbare Kammerwände aufweist. Dadurch ergibt sich ein geräuscharmer Betrieb. Ferner ist es dadurch möglich, die Kammerwände mit hohen Geschwindigkeiten zu rotieren, wodurch ein hoher Durchsatz möglich ist.

Vorzugsweise sind die Kammerwände relativ zueinander um eine gemeinsame vertikale Drehachse rotierbar. Damit ist es möglich, dass die rotierbaren Kammerwände gemeinsam als Schwingungsdämpfer funktionieren, sprich sich aus der Rotation ergebene Schwingungen einer Kammerwand durch gezielt dagegen gesteuerte Schwingungen der anderen, rotierenden Kammerwand aufheben lassen, wodurch die Vorrichtung insgesamt vibrationsarm, d.h. mit hoher Laufruhe steuerbar ist.

Die Vorrichtung, vor allem das daran das Werkzeug ausbildende Segment, kann insbesondere in Form einer Säule konfiguriert sein. Dies begünstigt einen insgesamt schlanken, d.h. bauraumreduzierten, Aufbau. Die Vorrichtung lässt sich daher hervorragend innerhalb bereits bestehender Produktionsstätten als Nachrüstset integrieren.

Eine vorteilhafte Variante sieht vor, dass die Vorrichtung ein Gehäuse aufweist, welches das Werkzeug umgibt. Dadurch lässt sich ein Eingriff in die rotierbaren Massen des Werkzeugs vermeiden. Das Gehäuse kann zumindest stellenweise Lüftungslöcher zum Abführen von Antriebswärme ausbilden.

Vorstellbar wäre es, dass innerhalb des Gehäuses für das Werkzeug ein temperierbarer Aufnahmeraum geschaffen ist, um eine Temperatur des anhand des Werkzeugs bearbeiteten Fleischguts zu kontrollieren. Eine dafür zum Einsatz kommende Kühleinheit kann vorzugsweise in Abhängigkeit einer erfassten Temperatur mindestens einer der beiden Kammerwände dynamisch gesteuert werden.

Gemäß einer Ausführungsform der Erfindung sind die Kammerwände mit unterschiedlichen Drehzahlen und/oder in entgegengesetzten Drehrichtungen zueinander rotierbar. Damit lässt sich gezielt der Kräfteeintrag auf das innerhalb der Durchmischungskammer befindliche Fleischgut steuern. Insbesondere sind die Kammerwände unabhängig voneinander rotierbar. Es wäre daher auch denkbar, dass zumindest temporär lediglich eine der beiden Kammerwände rotiert. In dieser Funktion, kann das Werkzeug wegen des dabei reduzierten Kräfteeintrags insbesondere zum Durchmischen einer zugeführten Fleischmasse eingesetzt werden, beispielsweise um vorgefertigtes Hackfleisch mit Gewürzen zu durchmischen.

Eine Variante sieht vor, dass mindestens eine der beiden Kammerwände mit einer Drehzahl von bis zu 300 Umdrehungen pro Minute rotierbar ist, vorzugsweise mit einer Drehzahl von bis zu 500 Umdrehungen pro Minute rotierbar ist. Vorzugsweise lassen sich die jeweiligen Drehzahlen der Kammerwände stufenlos einstellen. Die Drehzahlen der beiden Kammerwände können insbesondere synchronisiert sein.

Denkbar wäre es, dass zu Beginn eines Durchmischungsprozesses, d.h. bei einer neuen Charge an Fleischgut, mit der die Durchmischungskammer gefüllt wird, die Kammerwände lediglich mit einer vorbestimmten, begrenzten Drehzahl ansteuerbar sind, um das innerhalb der Durchmischungskammer zuerst eintreffende Fleischgut schonend zu durchmischen. Damit kann sichergestellt werden, dass sich das zu Beginn der Durchmischungskammer eingeführte Fleischgut erst mal in Richtung des Bodens der Durchmischungskammer absetzen kann.

Nützlich wäre vor allem in diesem Zusammenhang, eine Füllstandserfassung vorzusehen, die dazu ausgebildet ist, die Drehzahlbegrenzung dann aufzuheben, wenn sich damit ein vorbestimmter Füllgrad an Fleischgut in der Durchmischungskammer detektieren lässt. Diese Füllstanderfassung könnte damit leicht erkennen, zu welchem Zeitpunkt die Durchmischungskammer ausreichend mit Fleischgut befüllt ist, sodass der der von den Kammerwänden auf das Fleischgut ausgehende Kräfteeintrag, insbesondere die daraus resultierenden, von den Fleischstücken aufeinander übertragenen Kräfte, maximal wirken können.

Vorzugsweise weist die Vorrichtung zum Antreiben der Kammerwände zwei gesonderte E-Motoren auf. Besonders vorteilhaft ist es, wenn beide E-Motoren übereinander angeordnet sind. Ein schlanker Aufbau wäre insbesondere dadurch möglich, dass deren jeweilige Antriebsachsen einander überlagern, insbesondere beide sich mit der gemeinsamen vertikalen Drehachse der Kammerwände decken. Dies erlaubt einen bauraumreduzierten, säulenartigen Aufbau der Vorrichtung, die sich damit unter geringem Platzbedarf problemlos in einer bestehenden Produktionsstätte integrieren lässt.

Zweckmäßig wäre es, wenn das Werkzeug zwischen den beiden E-Motoren angeordnet ist. Dies begünstigt einen besonders robusten Aufbau der Vorrichtung, da sich damit eine gleichmäßige Gewichtsverteilung daran eingesetzter Komponenten ergibt. Eine hohe Standfestigkeit der Vorrichtung lässt sich vor allem dadurch erzielen, dass der untere E-Motor zum Antreiben der außenliegend gebildeten Kammerwand und der obere E-Motor zum Antreiben der innenliegend ausgebildeten Kammerwand ausgebildet sind.

Denkbar wäre es, dass mindestens einer der beiden E-Motoren seitlich neben der von ihm antreibbaren Kammerwand gelagert ist. Bei dieser Anordnung könnte ein Riemenantrieb dafür eingesetzt werden, um das Antriebsdrehmoment vom E-Motor auf die seitlich daneben gelagerte Kammerwand zu übertragen. Diese nicht übereinander, sondern nebeneinander konfigurierte Bauweise führt zu einer reduzierten Bauhöhe.

Eine Variante sieht vor, dass die Durchmischungskammer zumindest teilweise konisch und/oder zylindrisch ausgebildete, relativ zueinander rotierbare Kammerwände aufweist. Zylindrische, einander zugwandte Kammerwände bilden dazwischen eine Durchmischungskammer mit einem ringspaltförmigen Aufnahmevolumen für das Fleischgut aus, bieten mithin den Vorteil einer schlanken Bauweise. Konische, einander zugewandte Kammerwände bilden dazwischen eine Durchmischungskammer mit einem konischen Aufnahmevolumen für das Fleischgut aus, können mithin gegenüber einer zylindrischen Bauweise zu einem vergrößerten Fassungsvermögen führen. Außerdem kann bei der konischen Bauweise an einer im Bereich des geringsten Querschnitts gebildeten Auslassöffnung Fleischgut schnell aus der Durchmischungskammer herausgeführt werden, wodurch der Prozess zum Bilden von Eiweißaufschluss weiter beschleunigt werden kann.

Vorteilhaft ist es, wenn mindestens eine der relativ zueinander rotierbaren Kammerwände mindestens eine Schikane für das Fleischgut aufweist. Eine solche Schikane kann durch eine Vertiefung, eine Erhebung, insbesondere durch eine wendelförmige Erhebung, bspw. eine Schraubenform, vorliegen, um einen erhöhten Kräfteeintrag auf das Fleischgut auszuüben. Die Schikane kann dafür sorgen, dass sich der in der Durchmischungskammer gebildete Eiweißaufschluss gleichmäßig über das Fleischgut verteilt. Vorstellbare wäre es, dass mindestens eine der beiden Kammerwände zumindest bereichsweise eine mit einem gezackten Profil versehene Oberfläche aufweist.

Eine besonders vorteilhafte Variante sieht vor, dass wenigstens eine der relativ zueinander rotierbaren Kammerwände zumindest bereichsweise eine schraubenförmige Oberfläche ausbildet. Denkbar wäre es das die innenliegende Kammerwand von einem Körper in Form einer Schnecke gebildet ist. Die außenliegende Kammerwand kann durch einen Hohlkörper mit entlang seiner Innenfläche ausgebildeter Spiralform gebildet sein. Damit lässt sich dazwischen aufgenommenes Fleischgut noch besser durchwälzen, womit eine von allen Seiten her einwirkende Kräfteeinwirkung auf das Fleischgut möglich ist. Dies bewirkt eine noch schnellere Eiweißaufschlusserzeugung am Fleischgut. Außerdem sind derartige Oberflächen sehr gut zu reinigen.

Gemäß einer Ausführungsform ist zumindest eine der beiden Kammerwände durch einen austauschbaren Werkzeugteil gebildet, der durch einen anderen Werkzeugteil problemlos ersetzt werden kann. Dieser andere Werkzeugteil kann eine andere Oberflächenbeschaffenheit aufweisen. Vorzugsweise kann das gesamte Werkzeug, insbesondere werkzeuglos, für Reinigungsprozesse ausgebaut werden.

Vorstellbar ist es, dass die Vorrichtung eine Zuführeinrichtung zum Zuführen von Fleischgut in die Durchmischungskammer und/oder einen Aufnahmebehälter für Fleischgut umfasst, aus welchem heraus das Fleischgut der Durchmischungskammer zuführbar ist. Die Zuführeinrichtung kann ein Zuführrohr aufweisen, welches insbesondere den Aufnahmebehälter mit der Durchmischungskammer verbindet. Gemäß einer besonders schlichten Ausführung bildet das Zuführrohr allein die Zuführeinrichtung aus, sprich kein gesonderter Aufnahmebehälter zur Bevorratung von Fleischgut verwendet wird, sondern das Fleischgut direkt über das Zuführrohr in die Durchmischungskammer gelangt.

Vorteilhaft ist es, wenn der Aufnahmebehälter für das Fleischgut oberhalb der Durchmischungskammer positioniert ist. Dies hat den Effekt, dass eine vom Aufnahmebehälter erzeugte Gewichtskraft von oben auf die Vorrichtung wirkt, was auf die darunter positionierten, rotierbaren Massen der Durchmischungskammer eine vibrationsdämpfende Wirkung erzeugt, wodurch eine insgesamt gesteigerte Laufruhe der Vorrichtung zustande kommt.

Eine Variante sieht vor, dass der Aufnahmebehälter direkt oberhalb der Durchmischungskammer positioniert ist, sprich eine direkte Zuführung von Fleischgut aus dem Aufnahmebehälter in die Durchmischungskammer möglich ist. Ein zum Antrieben der Durchmischungskammer einsetzbarer E-Motor kann bei dieser Variante seitlich der Durchmischungskammer positioniert sein. Damit wird trotz Verwendung eines Aufnahmebehälters zur Bevorratung von Fleischgut eine reduzierte Bauhöhe der Vorrichtung erreicht und das im Aufnahmebehälter bevorratete Fleischgut kann direkt aus dem Aufnahmebehälter heraus der Durchmischungskammer zugeführt werden, d.h. ohne dazwischenliegende Rohrverbindung.

Die Durchmischungskammer kann insbesondere aus dem darüber positionierten Aufnahmebehälter durch eine daran am Boden ringspaltförmig ausgebildete Öffnung direkt mit Fleischgut versorgt werden. Durch das Eigengewicht der darüber liegenden Fleischmasse kann damit stets mit Verlassen von durchmischtem Fleischgut aus der Durchmischungskammer kontinuierlich von oben aus dem Aufnahmebehälter neues Fleischgut in die darunter angeschlossene Durchmischungskammer gedrückt werden. Damit sich das Fleischgut im Aufnahmebehälter gezielt auf die in dessen Boden ausgebildete ringspaltförmige Öffnung zubewegt, kann der Aufnahmebehälter eine sich zur Durchmischungskammer hin verjüngende Form aufweisen, insbesondere in Form eines Trichters an diese anschließen, sodass das Fleischgut aus dem Aufnahmebehälter gezielt der Durchmischungskammer zugeführt werden kann.

Denkbar wäre es, dass der Aufnahmebehälter doppelwandige Begrenzungswände aufweist, die dazwischen einen Luftspalt einschließen, damit sich eine Temperatur des im Aufnahmebehälter bevorrateten Fleischguts besser aufrechterhalten lässt. Die Begrenzungswände können temperierbar konfiguriert sein, um das darin aufgenommene Fleischgut zu kühlen.

Denkbar wäre es, dass eine Vielzahl von Werkzeugen mit rotierbaren Kammerwänden an den Aufnahmebehälter angeschlossen sind, um aus diesem Fleischgut zu erhalten. Diese Werkzeuge können aus dem Aufnahmebehälter parallel mit Fleischgut versorgt werden, wodurch sich eine erhöhte Durchflussrate ergibt.

Gemäß einer Ausführungsform umfasst die Durchmischungskammer sowohl eine Zuführöffnung für Fleischgut als auch eine dazu gesondert ausgebildete Abführöffnung für Fleischgut mit Eiweißaufschluss. Diese beiden Öffnungen ermöglichen einen unterbrechungsfreien, d.h. kontinuierlichen Durchmischungsprozess, da zu behandelndes Fleischgut genau dann der Durchmischungskammer durch die Zuführöffnung zugeführt werden kann, wenn ein innerhalb der Durchmischungskammer behandeltes Fleischgut mit Eiweißaufschluss die Durchmischungskammer durch die Abführöffnung verlässt. Dies bedeutet, dass Stillstandzeiten der Vorrichtung reduziert werden können.

Sowohl die Zuführung von Fleischgut als auch die Abführung von Fleischgut mit Eiweißaufschluss können durch den dazwischen stattfindenden Durchmischungsprozess innerhalb der Durchmischungskammer gesteuert werden. Dabei kann ein Volumenstrom durch Steuern der jeweiligen Drehzahlen der Kammerwände variiert werden. Insbesondere lässt sich dadurch die Vorrichtung problemlos in einen dynamischen Steuerungs- bzw. Regelungsvorgang integrieren, der dazu ausgebildet ist, in Abhängigkeit einer angeforderten Abfüllmenge an Fleischgut mit Eiweißaufschluss automatisch die Zuführung von unbehandeltem Fleischgut drehzahlgesteuert zu koordinieren.

Insbesondere wäre es denkbar, dass eine Drehzahlumkehr mindestens einer der rotierbaren Kammerwände dazu führt, dass allein dadurch eine Ausgabe von behandeltem Fleischgut aus der Abführöffnung der Durchmischungskammer verhinderbar ist, d.h. dadurch automatisch das in der Durchmischungskammer umgewälzte Fleischgut darin zurückgehalten werden kann, ohne dass dafür ein gesonderter Verschlussmechanismus für die Abführöffnung benötigt wird.

Eine besonders vorteilhafte Bauweise ergibt sich dadurch, dass das Werkzeug eine rotierbare Trommel und einen darin koaxial rotierbar gelagerten, unabhängig von der Trommel rotierbaren Drehkörper aufweist, wobei die Trommel und der Drehkörper die relativ zueinander rotierbaren Kammerwände der Durchmischungskammer bilden. Die Trommel bildet dabei den außenliegenden Werkzeugteil, sprich die außenliegende Kammerwand, und der Drehkörper den innenliegenden Werkzeugteil, sprich die innenliegende Kammerwand der dazwischen gebildeten Durchmischungskammer.

Vorzugsweise bildet die Trommel eine dem Drehkörper zugewandte, zylindrische oder konische Trommelwand aus und der Drehkörper eine der Trommel zugewandte, zylindrische oder konische Drehkörperwand aus, wobei die Trommelwand und die Drehkörperwand die relativ zueinander rotierbaren Kammerwände der Durchmischungskammer bilden.

Eine hohe Krafteinwirkung auf das Fleischgut ist vor allen Dingen dann möglich, wenn der zwischen der Trommel und dem Drehkörper gebildete Spalt eine Spaltweite aufweist, die kleiner als 10cm, bevorzugt kleiner als 5cm ausgebildet ist. Durch dieses enge Spaltmaß der Durchmischungskammer kann vermieden werden, dass Fleischgut während des Durchmischungsprozesses innerhalb der Durchmischungskammer ohne Krafteinwirkung unbehandelt bleibt.

Eine Variante sieht vor, dass die Vorrichtung eine mit der Durchmischungskammer verbundene Abführeinrichtung für mittels des Werkzeugs behandeltes Fleischgut mit Eiweißaufschluss aufweist. Die Abführeinrichtung kann eine Förderschnecke aufweisen, die dazu ausgebildet ist, in einer vorbestimmten Förderrichtung Fleischgut mit Eiweißaufschluss von der Vorrichtung abzutransportieren. Die Förderschnecke kann innerhalb eines Transportrohrs drehbar gelagert sein, welches mit der Abführöffnung der Durchmischungskammer verbunden ist. Damit lässt sich das mit Eiweißaufschluss hergestellte Fleischgut an einen vorbestimmten Abgabeort transportieren.

Denkbar wäre es, dass das Transportrohr, zumindest jedoch ein Teil davon, schwenkbar und/oder teleskopierbar ausgebildet ist, um darin gefördertes Fleischgut mit Eiweißaufschluss an verschiedenen Abgabeorten abgeben zu können.

Die Abführeinrichtung kann einen Abscheider zum Absondern von überschüssigen Eiweißaufschluss umfassen. Insbesondere kann das Transportrohr den Abscheider aufweisen, der daran beispielsweise als ein am Rohrboden gelochter Abschnitt ausgebildet ist, entlang welchem sich von darüber gefördertem Fleischgut überschüssiger Eiweißaufschluss absondern lässt.

Vorzugsweise sind sämtliche, mit dem Fleischgut in Berührung kommende Oberflächen der Vorrichtung durch Komponenten aus Edelstahl gebildet. Manche Oberflächen können sogar hochpoliert sein, um daran einen Niederschlag von Verunreinigungen besser vermeiden zu können.

Eine Variante sieht vor, dass die Abführeinrichtung mindestens ein rotierbares Schneidwerkzeug aufweist, um das aus der Durchmischungskammer heraus geförderte Fleischgut mit Eiweißaufschluss bzw. Mischgut zu zerkleinern. Damit wäre es auch möglich, aus den die Durchmischungskammer verlassenden Fleischstücken eine breiartige homogene Fleischmasse mit Eiweißaufschluss herzustellen.

Das Schneidwerkzeug kann mindestens ein rotierbares Schneidmesser umfassen und/oder ist insbesondere ausgangs der Abführeinrichtung als abnehmbarer Anbausatz befestigt.

Die Herstellung von Eiweißaufschluss am Fleischgut kann gemäß einer vorteilhaften Variante dadurch gesteigert werden, dass innerhalb der Durchmischungskammer ein Vakuum erzeugbar ist. Dafür kann die Vorrichtung mindestens eine mit der Durchmischungskammer verbundene Vakuumpumpe aufweisen. Die Durchmischungskammer kommt bei dieser vorteilhaften Variante als Vakuumkammer zum Einsatz, erfüllt damit in technischer Hinsicht eine Doppelfunktion. Das anliegende Vakuum kann die mittels Rotation auf das in der Durchmischungskammer befindliche Fleischgut ausgeübten Press- und Gegenpresskräfte derart ergänzen, dass sich daran noch besser Eiweißaufschluss ausbilden lässt. Vor allen Dingen begünstigt das Vakuum das Einziehen einer (Gewürz-)Flüssigkeit, beispielsweise Lake, in das in der Durchmischungskammer bearbeitete Fleischgut.

Denkbar wäre es, dass an der Vorrichtung einer der daran zum Rotieren der Kammerwände einsetzbaren E-Motoren auch als Antrieb der Vakuumpumpe vorliegt. Bei dieser Ausführungsform könnte das Anliegen des Vakuums an das Rotieren der Kammerwand gekoppelt sein, sprich automatisch in der Durchmischungskammer erzeugt werden, wenn die Kammerwand rotiert. Alternativ dazu kann die Vakuumpumpe auch einen eigenen Antrieb, insbesondere einen eigenen E-Motor aufweisen.

Eine Ausführungsvariante der Erfindung betrifft eine Formfleischerzeugungsanlage, umfassend mindestens eine erfindungsgemäße Vorrichtung sowie eine Abfüllstation, an welcher das mittels der Vorrichtung mit Eiweißaufschluss erzeugte Fleischgut insbesondere in mindestens eine an der Abfüllstation bereitgestellte Form zur Herstellung von Formfleisch abfüllbar ist. Der Eiweißaufschluss an den Fleischstücken sorgt dafür, dass sich die in der Form aufgenommenen Fleischstücke durch einen Räucher- bzw. Garprozess miteinander verbinden, sodass ein entsprechend der Form zusammenhängender Fleischkörper entsteht, der sich hervorragend in Scheiben schneiden lässt.

Eine Variante sieht vor, dass die Abfüllstation einen Vakuumierer aufweist, der dazu ausgebildet ist, das die Vorrichtung verlassende Fleischgut mit Eiweißaufschluss in Portionen unter Vakuumverschluss zu verpacken.

Insbesondere ist es denkbar, dass mehrere erfindungsgemäße Vorrichtungen in Reihe nebeneinander über die Abführeinrichtung mit der Abfüllstation verbunden sind, wobei die Abführeinrichtung dazu ausgebildet ist, aus den jeweiligen erfindungsgemäßen Vorrichtungen Fleischgut mit Eiweißaufschluss aufzunehmen und an die Abfüllstation weiter zu transportieren. Das dort ankommende Fleischgut kann dann in bereitgestellte Formen zur Erzeugung von Formfleisch gefüllt werden oder alternativ einem Vakuumverpackungsprozess zugeführt werden.

Insbesondere können an der Abfüllstation hintereinander daran zugeführte Formen mit Fleischgut gefüllt und von dort in einer gewünschten Richtung abgeführt werden. Für die Bereitstellung leerer Formen könnte die Formfleischerzeugungsanlage eine Unterführung bzw. eine Niederflurfördereinrichtung aufweisen. Diese kann zumindest abschnittsweise innerhalb eines Maschinengestells der Formfleischerzeugungsanlage verlaufen. Eine derartige Formfleischerzeugungsanlage lässt sich als Produktionslinie auf engem Bauraum integrieren. Insbesondere verfügt die Formfleischerzeugungsanlage einen geradlinigen Aufbau. Es wäre damit denkbar, dass mehrere Formfleischerzeugungsanlagen als parallele Produktionslinien nebeneinander arbeiten.

Ferner bezieht sich die Erfindung auf ein Verfahren zur Erzeugung von Eiweißaufschluss an Fleischgut, wobei das Fleischgut, insbesondere Fleischstücke oder Hackfleisch, wenigstens einer Durchmischungskammer zugeführt wird. Das erfindungsgemäße Verfahren sieht vor, dass gegenüberliegende Kammerwände der Durchmischungskammer zum Ausüben von mechanischen Kräften auf das dazwischen befindliche Fleischgut relativ zueinander rotiert werden können. Damit ist es möglich, innerhalb kurzer Zeit durch die Kammerwände derart einen mechanischen Kräfteeintrag auf das dazwischen befindliche Fleischgut zu steuern, dass sich daran eine gewünschte Masse an Eiweißaufschluss herstellen lässt, der als Bindungsstärke für einen anschließenden Verarbeitungsprozess, insbesondere bei der Herstellung von Formfleisch, vorteilhaft ist.

Insbesondere können die Kammerwände zumindest temporär in entgegengesetzten Drehrichtungen und/oder um eine gemeinsame vertikale Drehachse rotiert werden, um dazwischen Fleischgut mit Eiweißaufschluss herzustellen.

Gemäß einer Variante wird an der Durchmischungskammer ein Vakuum angelegt, wodurch sich die durch Rotation erzeugten mechanischen Kräfte auf das in der Durchmischungskammer aufgenommene Fleischgut steigern lassen, sodass die Herstellung von Eiweißaufschluss innerhalb von kürzerer Zeit möglich.

Außerdem bezieht sich die Erfindung auf die Verwendung einer Durchmischungskammer mit gegenüberliegenden, relativ zueinander rotierbaren Kammerwänden zum Ausüben eines gesteuerten, mechanischen Kräfteeintrags auf dazwischen befindliches Fleischgut, um daran Eiweißaufschluss zu erzeugen.

Vorzugsweise wird die Durchmischungskammer dafür verwendet, um darin eingeschlossene, das Kammervolumen füllende Fleischstücke durch Rotation mindestens einer der Kammerwände mit Press- und Gegenpresskräften zu beaufschlagen, damit aus einer oberflächlichen Zellstruktur der eingeschlossenen Fleischstücke Eiweißaufschluss gebildet wird. Optional kann die Durchmischungskammer durch Anlegen eines Vakuums zwischen den Kammerwänden zusätzlich als Vakuumkammer zum Einsatz kommen.

Denkbar ist es, dass mehrere in Reihe in Produktionsrichtung hintereinander angeordnete Durchmischungskammern eingesetzt werden, um Fleischgut mit Eiweißaufschluss herzustellen, welches unter Einsatz einer Abführeinrichtung an einer in Produktionsrichtung nachgelagerten Abfüllstation hinzugeführte Formen gefüllt wird.

Die Erfindung wird beispielhaft anhand der folgenden Figuren genauer erläutert. Es zeigen:
- Fig. 1: eine Seitenansicht der erfindungsgemäßen Vorrichtung in Schnittdarstellung,
- Fig. 2: eine perspektivische Darstellung der in Figur 1 gezeigten Vorrichtung,
- Fig. 3: eine Ausführungsform der erfindungsgemäßen Vorrichtung mit Aufnahmebehälter,
- Fig. 4a: eine schematische Darstellung einer erfindungsgemäßen Vorrichtung mit zylindrischen Kammerwänden,
- Fig. 4b: eine schematische Darstellung einer erfindungsgemäßen Vorrichtung mit konischen Kammerwänden, und
- Fig. 5: eine Formfleischerzeugungsanlage mit mehreren erfindungsgemäßen Vorrichtungen.

Gleiche technische Komponenten sind in den Figuren jeweils mit denselben Bezugszeichen versehen.

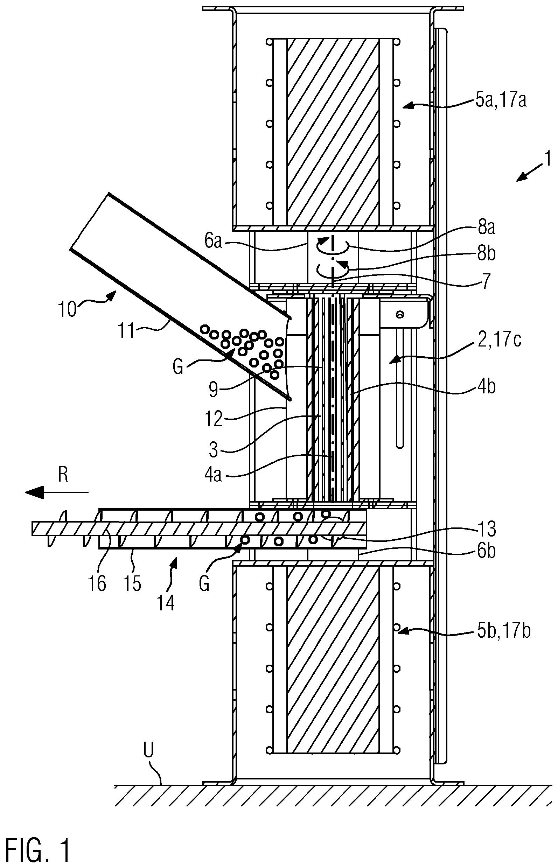

Figur 1 zeigt eine Vorrichtung 1 zur Erzeugung von Eiweißaufschluss an Fleischgut G. Das Fleischgut G wird in Figur 1 durch Fleischstücke gebildet, beispielsweise geschnetzeltes Schweinefleisch. Die Vorrichtung 1 verfügt über ein Werkzeug 2, das eine Durchmischungskammer 3 für das Fleischgut G ausbildet. Das Werkzeug 2 aus Figur 1 weist einen zylindrischen Aufbau auf.

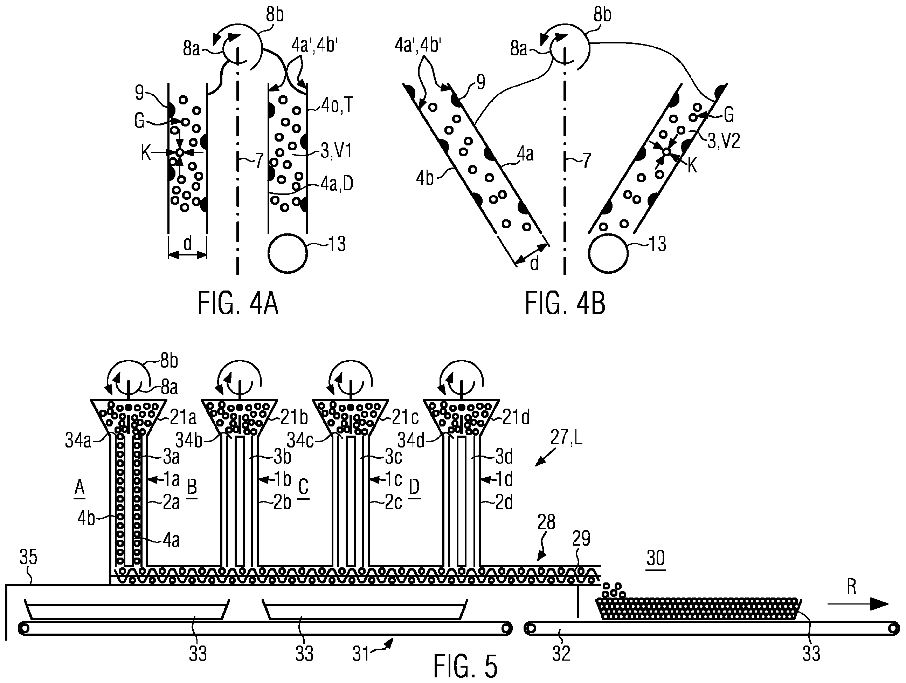

Die Durchmischungskammer 3 aus Figur 1 weist gegenüberliegende, relativ zueinander rotierbare Kammerwände 4a, 4b zum Steuern von auf das dazwischen befindliche Fleischgut G ausgeübten Press- und Gegenpresskräften K (siehe Figuren 4A und 4B) auf. Gemäß Figur 1 sind die Kammerwände 4a, 4b der Durchmischungskammer 3 zylindrisch ausgebildet. Dadurch verfügt das Werkzeug 2 über eine zylindrische Bauform.

Die in Figur 1 innenliegend gezeigte Kammerwand 4a ist mittels eines E-Motors 5a antreibbar. Für die in Figur 1 außenliegend gezeigte Kammerwand 4b ist ein weiterer E-Motor 5b vorgesehen. Figur 1 zeigt, dass das Werkzeug 2 einschließlich der damit gebildeten Durchmischungskammer 3 zwischen den beiden E-Motoren 5a, 5b gelagert ist. Die beiden E-Motoren 5a, 5b weisen jeweilige Antriebsachsen 6a, 6b auf, die zusammen mit den Kammerwänden 4a, 4b um eine gemeinsame vertikale Drehachse 7 rotierbar sind. Die Vorrichtung 1 aus Figur 1 verfügt damit über eine schlanke Bauweise, liegt insgesamt in Form einer Säule vor, die sich in dieser Bauweise gut in einer Produktionsstätte aufstellen lässt.

Figur 1 deutet darauf hin, dass die jeweiligen Kammerwände 4a, 4b des Werkzeugs 2 in entgegengesetzten Richtungen 8a, 8b um die vertikale Drehachse 7 rotierbar sind. Zwischen den beiden Kammerwänden 4a, 4b ist eine Schikane 9 schematisch dargestellt (siehe auch Figuren 4A und 4B), die an der innenliegenden Kammerwand 4a und/oder an der außenliegenden Kammerwand 4b ausgebildet ist. Die Schikane 9 liegt beispielsweise als Spirale vor, sodass die Kammerwand 4a beziehungsweise die Kammerwand 4b eine schraubenförmige Oberfläche damit ausbildet. Denkbar ist es, dass beide Kammerwände 4a, 4b eine schneckenförmige Schikane 9 aufweisen.

Die in Figur 1 dargestellte Vorrichtung 1 weist ferner eine Zuführeinrichtung 10 auf. Gemäß Figur 1 liegt die Zuführeinrichtung 10 als Zuführrohr 11 zum Zuführen von Fleischgut G in die Durchmischungskammer 3 vor. Das Zuführrohr 11 mündet in einem Gehäuse 12 für das Werkzeug 2 und führt das Fleischgut G in die Durchmischungskammer 3, beispielsweise durch eine nicht dargestellte Zuführöffnung der äußeren Kammerwand 4b. Das Gehäuse 12 ist im Wesentlichen zylindrisch ausgebildet und bildet eine Aufnahme für das Werkzeug 2 aus.

Außer der in Figur 1 nicht zu sehenden Zuführöffnung verfügt die Durchmischungskammer 3 über eine gesondert ausgebildete Abführöffnung 13 für Fleischgut G mit Eiweißaufschluss. Diese ist am unteren Ausgang des Werkzeugs 2 gebildet. Gemäß Figur 1 führt die Abfuhröffnung 13 das mit Eiweißaufschluss gebildete Fleischgut G in eine Abführeinrichtung 14. Die Abführeinrichtung 14 umfasst ein Transportrohr 15 sowie eine darin angeordnete Schnecke 16 als Fördermittel, um das durch die Abführöffnung 13 in das Rohr 15 eintretende Fleischgut G in Förderrichtung R zu weiter zu transportieren.

In das Zuführrohr 11 der Zuführeinrichtung 10 geschüttetes Fleischgut G gelangt durch das als Rutsche gebildete Zuführrohr 11 in die Durchmischungskammer 3. Indem mindestens eine der Kammerwände 4a, 4b um die Drehachse 7 in Rotation versetzt wird, kann das zwischen den Kammerwänden 4a, 4b aufgenommene Fleischgut G derart mit Press- und Gegenpresskräften K beaufschlagt werden, dass sich an der Oberfläche der Fleischstücke Eiweißaufschluss bildet, welcher als Bindungsstärke für nachgelagerte Prozesse dient, beispielsweise als Bindungsstärke zur Herstellung von Formfleisch.

Durch entgegengesetztes, aber auch durch gleichgerichtetes Rotieren mit gegebenenfalls verschiedenen Drehzahlen können die beiden Kammerwände 4a, 4b derart gesteuert werden, dass das dazwischen befindliches Fleischgut G in einem gewünschten Volumenstrom durch die Abführöffnung 13 in die Abführeinrichtung 14 gelangt, wobei die darin rotierende Schnecke 16 das Fleischgut G in Förderrichtung R abtransportiert.

Die in Figur 1 dargestellte Vorrichtung 1 liegt aufgrund dessen Säulenform als Mini-Tumbler mit drehzahlsteuerbaren Kammerwänden 4a, 4b vor. Die in Figur 1 gezeigte, säulenartige Bauweise lässt sich einfach auf einem Untergrund U montieren, wird beispielsweise darauf festgeschraubt.

Die Vorrichtung 1 aus Figur 1 verfügt in vertikaler Ausrichtung über drei Modulsegmente, nämlich ein oberes Antriebsmodul 17a, ein unteres Antriebsmodul 17b sowie ein dazwischenliegendes Werkzeugmodul 17c samt der Zuführeinrichtung 10. Die in vertikaler Richtung übereinander angeordneten Module, das heißt das obere Antriebsmodul 17a, das untere Antriebsmodul 17b, sowie das dazwischenliegende Werkzeugmodul 17c, bilden übereinander zusammengebaut eine schlanke Säule mit entlang der Drehachse 7 rotierenden Massen aus, sodass eine insgesamt robuste, schwingungsunempfindliche Bauweise entsteht.

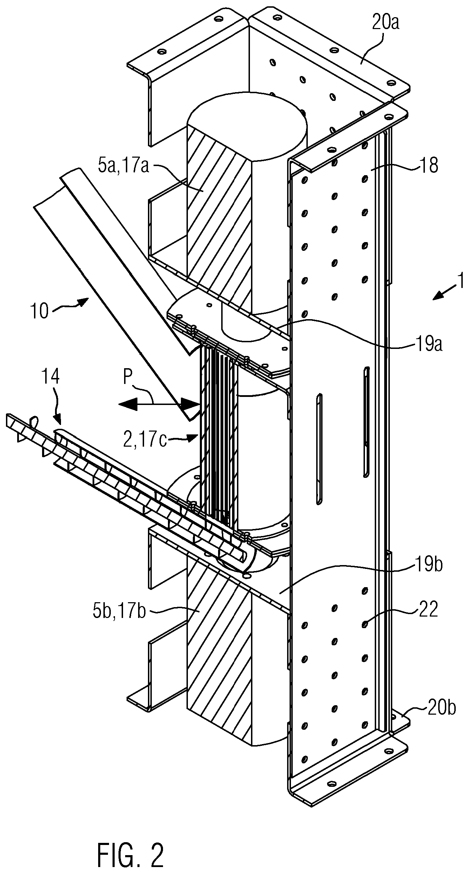

Figur 2 zeigt die in Figur 1 dargestellte Vorrichtung 1 in perspektivischer Schnittdarstellung. Die Vorrichtung 1 weist eine Ummantelung 18 auf, die die E-Motoren 5a, 5b sowie das dazwischen angeordnete Werkzeug 2 einhaust. Die übereinander angeordneten Modulsegmente 17a, 17b, 17c sind durch in der Ummantelung 18 gebildete Trennwände 19a, 19b voneinander separiert, wodurch sich ein besonders stabiler Aufbau für die Vorrichtung 1 ergibt. Dieser segmentierte Aufbau bietet auch den Vorteil, dass sich das zwischen den E-Motoren 5a, 5b befindliche Werkzeug 2 problemlos ausbauen lässt, ohne dass dabei die E-Motoren 5a, 5b ausgebaut werden müssen. Diese Ausbaufunktion für das Werkzeug 2 ist schematisch durch den Doppelpfeil P dargestellt.

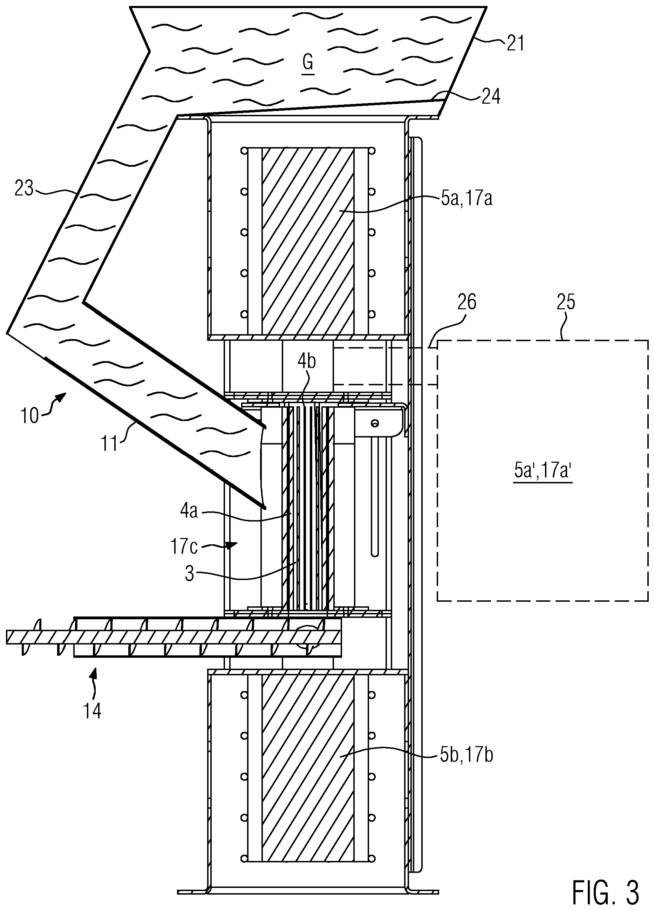

Ferner zeigt Figur 2, dass die Ummantelung 18 mit unteren und oberen Befestigungswinkeln 20a, 20b ausgebildet ist. Die unteren Befestigungswinkel 20b können dafür eingesetzt werden, um die Vorrichtung 1 auf dem Untergrund U festzuschrauben. Die oberen Befestigungswinkel 20a können zum Montieren eines Aufnahmebehälters 21 (siehe Figur 3) benutzt werden. Zum Abführen von Motorwärme sind in der dargestellten Ummantelung 18 Lüftungslöcher 22 den jeweiligen E-Motoren 5a, 5b zugeordnet.

Figur 3 zeigt die Vorrichtung 1 aus den Figuren 1 und 2 mit einem darauf montierten Aufnahmebehälter 21. Der Aufnahmebehälter 21 dient zur Bevorratung von Fleischgut G und ist über eine Rohrverbindung 23, die mit dem Zuführrohr 22 zusammengesteckt ist, mit der Durchmischungskammer 3 verbunden. Das Zuführrohr 11 und die Rohrverbindung 23 können auch eine integrale Bauweise haben.

Über einen schräg ausgebildeten Boden 24 des Aufnahmebehälters 21 gleitet das darin bevorratete Fleischgut G automatisch in die Rohrverbindung 23 und weiter über das Zuführrohr 11 bis in die Durchmischungskammer 3, worin es durch in Rotation versetzbare Kammerwände 4a, 4b mit einem mechanischen Kräfteeintrag behandelt wird, um daran Eiweißaufschluss auszubilden.

Figur 3 deutet außerdem in schematischer Darstellung darauf hin, dass der obere E-Motor 5a, das heißt das obere Antriebsmodul 17a in eine gestrichelt dargestellte Zone 25 verlagerbar ist. Ein in dieser Zone 25 positionierter E-Motor 5a beziehungsweise ein darin angeordnetes Antriebsmodul 17a kann mittels eines Keilriemens 26 eine Drehbewegung auf die innenliegende Kammerwand 4a übertragen, um diese ins Rotieren zu bringen. Diese alternative Konfiguration führt zu einer geringeren Bauhöhe der Vorrichtung 1. Sollte diese alternative Konfigurierung zusätzlich einen Aufnahmebehälter 21 gemäß Figur 3 aufweisen, so kann dieser direkt auf dem Werkzeugmodul 17c montiert werden. Diese Variante hätte den Vorteil, dass das Fleischgut G direkt aus dem Aufnahmebehälter 21 heraus, durch eine im Boden 24 ausgebildete Öffnung in die Durchmischungskammer 3 gelangen könnte, sprich ohne gesonderte Zuführeinrichtung 10. Bei dieser direkten Fleischgutzuführung wäre es vorteilhaft, wenn der Aufnahmebehälter 21 in Form eines Trichters vorliegen würde, in dessen Boden eine ringspaltförmige Öffnung gebildet ist. Dieses Prinzip der direkten Fleischgutzuführung wird schematisch in Figur 5 dargestellt.

Die zuvor in Zusammenhang mit den Figuren 1 bis 3 beschriebenen Vorrichtungen 1 bilden einen Mini-Tumbler, der gemäß Figur 1 in einfacher Ausführung mit der Zuführeinrichtung 10, das heißt ohne Aufnahmebehälter 21 oder der gemäß den in Figur 3 gezeigten Varianten, sprich mit indirekter oder direkter Fleischgutzuführung aus dem Aufnahmebehälter 21, ausgebaut ist. Sämtliche Varianten verfügen über eine kompakte Bauweise und lassen sich einwandfrei auf engem Bauraum installieren.

Die Funktionsweise einer zylindrisch ausgebildeten Durchmischungskammer 3 wird in Figur 4A schematisch dargestellt. Eine konische Durchmischungskammer 3 wird in Zusammenhang mit den Figur 4B beschrieben.

Figur 4A zeigt zylindrische Kammerwände 4a, 4b, die um eine gemeinsame vertikale Drehachse 7 rotierbar sind und einander zugewandte schraubenförmige Oberflächen 4a', 4b'. Die Kammerwand 4a wird durch eine Trommel T gebildet. Die Kammerwand 4b wird durch einen in der Trommel T aufgenommenen Drehkörper D gebildet.

Figur 4A zeigt, dass die Kammerwände 4a, 4b in entgegengesetzten Drehrichtungen 8a, 8b um die Drehachse 7 rotierbar sind. Dazwischen befindliches Fleischgut G wird mechanisch mit Press- und Gegenpresskräften K durchwälzt, um daran Eiweißaufschluss herzustellen, wobei zwischen den Kammerwänden 4a, 4b mittels Kräfteeintrags behandeltes Fleischgut G durch die schematisch dargestellte Abführöffnung 13 das Werkzeug 2 verlässt, insbesondere der in Figur 1 dargestellten Abführeinrichtung 14 zugeführt werden kann.

Gemäß Figur 4A verfügt die Durchmischungskammer 3 über ein zwischen den zylindrischen Kammerwänden 4a, 4b gebildetes Volumen V1, welches ein Fassungsvermögen der Durchmischungskammer 3 bildet. Das Volumen V1 ist u.a. durch eine Spaltweite d definiert. Die innerhalb des Volumens V1 an den Kammerwänden 4a, 4b zum Einsatz kommenden Schikanen 9 sorgen dafür, dass das dazwischen eingefüllte Fleischgut G mit Press- und Gegenpresskräften K beaufschlagt durchmischt wird, damit es an seiner Oberfläche Eiweißaufschluss ausbildet.

Figur 4B zeigt eine Durchmischungskammer 3 mit einem zwischen den konischen Kammerwänden 4a, 4b gebildeten Volumen V2. Diese konisch ausgebildeten Kammerwände 4a, 4b weisen ebenfalls einander zugewandte schraubenförmige Oberflächen 4a', 4b' auf. Das Volumen V2 verfügt über ein größeres Fassungsvermögen als das in Figur 4A dargestellte Volumen V1.

Die zuvor dargestellten Vorrichtungen 1 können entweder einzeln oder mehrfach an einer Produktionsstätte zum Einsatz kommen.

Figur 5 zeigt eine Formfleischerzeugnisanlage 27 mit mehreren in Produktionsrichtung R hintereinander arbeitenden Vorrichtungen 1a bis 1d, die jeweils zum Erzeugen von Fleischgut G mit Eiweißaufschluss konfiguriert sind und gemeinsam eine Produktionslinie L bilden. Die Anzahl der Vorrichtungen 1a bis 1d, die zusammen die Produktionslinie L bilden, kann beliebig variieren.

Gemäß Figur 5 sind vier in Produktionsrichtung R hintereinander angeordnete Vorrichtungen 1a, 1b, 1c, 1d an eine gemeinsame Abführeinrichtung 28 angeschlossen. Die gemeinsame Abführeinrichtung 28 weist eine entlang der Produktionsrichtung R gelagerte, rotierbare Schnecke 29 auf, mittels welcher sich das aus den Vorrichtungen 1a bis 1d mittels Kräfteeintrag K behandelte Fleischgut G zu einer Abfüllstation 30 fördern lässt. Ferner zeigt Figur 5, dass mittels einer Niederflurfördereinrichtung 31, die Transportbänder 31, 32 aufweist, nacheinander Formen 33 an der Abfüllstation 30 zur Verfügung gestellt werden, damit diese mit Fleischgut G aus der Abführeinrichtung 28 befüllt werden können.

Gemäß Figur 5 sind die jeweiligen Aufnahmebehälter 21a bis 21d für eine direkte Fleischgutzuführung unmittelbar auf den jeweiligen Werkzeugen 2a bis 2d montiert, wobei aus den Aufnahmebehältern 21a bis 21d durch jeweilige ringspaltförmige Zufuhröffnungen 34a bis 34d Fleischgut G den jeweiligen Durchmischungskammern 3a bis 3d zugeführt werden kann. Die jeweiligen Aufnahmebehälter 21a bis 21d weisen eine sich nach unten verjüngende Trichterform auf, damit das darin bevorratete Fleischgut G gezielt durch die jeweiligen ringspaltförmigen Zufuhröffnungen 34a bis 34d den jeweiligen Durchmischungskammern 3a bis 3d zugeführt werden kann.

In Figur 5 können die jeweiligen an den Stellen A bis D positionierten Vorrichtungen 1a bis 1d nacheinander betrieben werden. In Figur 5 startet beispielsweise die in Produktionsrichtung R an erster Stelle A positionierte Vorrichtung 1a damit Fleischgut G mit Eiweißaufschluss herzustellen. Sobald der Aufnahmebehälter 21a leer ist, kann die nächste Vorrichtung 1b an der Stelle B damit beginnen Fleischgut G mit Eiweißaufschluss herzustellen, sodass der leere Aufnahmebehälter 21a befüllt werden kann, ohne dass es zu einer Unterbrechung der Fleischgutversorgung an der Abfüllstation 30 kommt.

Die in Figur 5 gezeigte Niederflurfördereinrichtung 31 lässt sich innerhalb eines Maschinengestells 35 der Formfleischerzeugnisanlage 27 integrieren. Mit Fleischgut G befüllte Formen 33 können in Produktionsrichtung R einer nachgelagerten Rächer- bzw. Garstation zur Temperaturbehandlung des in den Formen 33 aufgenommenen Fleischguts G, beispielsweise zur Herstellung von Kochschinken, zugeführt werden.

## Patentansprüche

1. Vorrichtung (1) mit mindestens einem Werkzeug (2) zur Erzeugung von Eiweißaufschluss an Fleischgut (G), wobei das Werkzeug (2) eine Durchmischungskammer (3) für Fleischgut (G) ausbildet, **dadurch gekennzeichnet, dass** die Durchmischungskammer (3) gegenüberliegende, in Rotation versetzbare und relativ zueinander rotierbare Kammerwände (4a, 4b) zum Steuern von auf dazwischen befindliches Fleischgut (G) ausgeübten Kräften (K) aufweist.

2. Vorrichtung nach Anspruch 1, **dadurch gekennzeichnet, dass** die Durchmischungskammer (3) relativ zueinander koaxial rotierbare Kammerwände (4a, 4b) aufweist.

3. Vorrichtung nach Anspruch 2, **dadurch gekennzeichnet, dass** die Kammerwände (4a, 4b) relativ zueinander um eine gemeinsame vertikale Drehachse (7) rotierbar sind und/oder die Vorrichtung (1) zum Antrieben der Kammerwände (4a, 4b) zwei gesonderte EMotoren (5a, 5b) aufweist.

4. Vorrichtung nach einem der vorangehenden Ansprüche, **dadurch gekennzeichnet, dass** die Kammerwände (4a, 4b) mit unterschiedlichen Drehzahlen und/oder in entgegengesetzten Drehrichtungen (8a, 8b) rotierbar sind.

5. Vorrichtung nach einem der vorangehenden Ansprüche, **dadurch gekennzeichnet, dass** die Kammerwände (4a, 4b) der Durchmischungskammer (3) zumindest teilweise konisch und/oder zylindrisch ausgebildet sind.

6. Vorrichtung nach einem der vorangehenden Ansprüche, **dadurch gekennzeichnet, dass** mindestens eine der relativ zueinander rotierbaren Kammerwände (4a, 4b) eine Schikane (9) für das Fleischgut (G) aufweist und/oder die relativ zueinander rotierbaren Kammerwände (4a, 4b) zumindest bereichsweise einander zugewandte, schraubenförmige Oberflächen (4a', 4b') aufweisen.

7. Vorrichtung nach einem der vorangehenden Ansprüche, **dadurch gekennzeichnet, dass** die Vorrichtung (1) eine Zuführeinrichtung (10) zum Zuführen von Fleischgut (G) in die Durchmischungskammer (3) und/oder einen Aufnahmebehälter (21) für Fleischgut (G) umfasst, aus welchem heraus das Fleischgut (G) der Durchmischungskammer (3) zuführbar ist.

8. Vorrichtung nach einem der vorangehenden Ansprüche, **dadurch gekennzeichnet, dass** die Durchmischungskammer (3) sowohl eine Zuführöffnung für Fleischgut (G) als auch eine dazu gesondert ausgebildete Abführöffnung (13) für Fleischgut (G) mit Eiweißaufschluss umfasst.

9. Vorrichtung nach einem der vorangehenden Ansprüche, **dadurch gekennzeichnet, dass** das Werkzeug (2) eine rotierbare Trommel (T) und einen darin koaxial gelagerten, gesondert von der Trommel (T) rotierbaren Drehkörper (D) aufweist, wobei die Trommel (T) und der Drehkörper (D) die relativ zueinander rotierbaren Kammerwände (4a, 4b) der Durchmischungskammer (3) bilden.

10. Vorrichtung nach Anspruch 9, **dadurch gekennzeichnet, dass** die Trommel (T) eine dem Drehköper (D) zugewandte, zylindrische oder konische Trommelwand ausbildet und der Drehkörper (D) eine der Trommel (T) zugewandte, zylindrische oder konische Drehkörperwand ausbildet, wobei die Trommelwand und die Drehkörperwand die relativ zueinander rotierbaren Kammerwände (4a, 4b) der Durchmischungskammer (3) bilden.

11. Vorrichtung nach einem der vorangehenden Ansprüche, **dadurch gekennzeichnet, dass** die Vorrichtung (1) eine mit der Durchmischungskammer (3) verbundene Abführeinrichtung (14) für mittels des Werkzeugs (2) behandeltes Fleischgut (G) aufweist und/oder dass die Vorrichtung (1) mindestens eine mit der Durchmischungskammer (3) verbundene Vakuumpumpe aufweist, anhand derer innerhalb der Durchmischungskammer (3) ein Vakuum erzeugbar ist.

12. Formfleischerzeugungsanlage (27), umfassend mindestens eine Vorrichtung (1) nach einem der vorangehenden Ansprüche sowie eine Abfüllstation (30), an welcher das mittels der Vorrichtung (1) mit Eiweißaufschluss erzeugte Fleischgut (G), insbesondere Fleischstücke, in mindestens eine an der Abfüllstation (30) bereitgestellte Form (33) abfüllbar ist oder mittels eines daran ausgebildeten Vakuumierers portionierbar sind.

13. Verfahren zum Erzeugen von Eiweißaufschluss an Fleischgut (G), wobei Fleischgut (G) wenigstens einer Durchmischungskammer (3) zugeführt wird, **dadurch gekennzeichnet, dass** gegenüberliegende Kammerwände (4a, 4b) der Durchmischungskammer (3) zum Ausüben von mechanischen Kräften (K) auf dazwischen befindliches Fleischgut (G) in Rotation versetzt und relativ zueinander rotiert werden können.

14. Verfahren nach Anspruch 13, **dadurch gekennzeichnet, dass** die Kammerwände (4a, 4b) zumindest temporär in entgegengesetzten Drehrichtungen (8a, 8b) und/oder um eine gemeinsame vertikale Drehachse (7) rotiert werden können.

15. Verwendung einer Durchmischungskammer (3) mit gegenüberliegenden, in Rotation versetzbaren und relativ zueinander rotierbaren Kammerwänden (4a, 4b) zum Ausüben eines gesteuerten, mechanischen Kräfteeintrags (K) auf dazwischen befindliches Fleischgut (G), um daran Eiweißaufschluss zu erzeugen.

## Claims

1. Apparatus (1) with at least one tool (2) for producing protein breakdown on meat material (G), wherein the tool (2) forms a mixing chamber (3) for meat material (G), **characterized in that** the mixing chamber (3) has opposite, rotatable chamber walls (4a, 4b) rotatable relative to each other for controlling forces (K) exerted on meat material (G) located therebetween.

2. Apparatus according to claim 1, **characterized in that** the mixing chamber (3) has chamber walls (4a, 4b) rotatable coaxially relative to each other.

3. Apparatus according to claim 2, **characterized in that** the chamber walls (4a, 4b) are rotatable relative to each other about a common vertical rotation axis (7), and/or the apparatus (1) comprises two separate electric motors (5a, 5b) for driving the chamber walls (4a, 4b).

4. Apparatus according to one of the preceding claims, **characterized in that** the chamber walls (4a, 4b) are rotatable at different rotational speeds and/or in opposite rotational directions (8a, 8b).

5. Apparatus according to one of the preceding claims, **characterized in that** the chamber walls (4a, 4b) of the mixing chamber (3) are at least partially conical and/or cylindrical chamber walls (4a, 4b).

6. Apparatus according to one of the preceding claims, **characterized in that** at least one of the chamber walls (4a, 4b) rotatable relative to each other has a baffle (9) for the meat material (G) and/or the chamber walls (4a, 4b) rotatable relative to each other have helical surfaces (4a', 4b') facing each other at least in some areas.

7. Apparatus according to one of the preceding claims, **characterized in that** the apparatus (1) comprises a feeding device (10) for feeding meat material (G) into the mixing chamber (3) and/or a receptacle (21) for meat material (G), from which the meat material (G) can be fed into the mixing chamber (3).

8. Apparatus according to one of the preceding claims, **characterized in that** the mixing chamber (3) comprises both a feeding opening for meat material (G) and a discharge opening (13), formed separately therefrom, for meat material (G) with protein breakdown.

9. Apparatus according to one of the preceding claims, **characterized in that** the tool (2) has a rotatable drum (T) and a rotating body (D) mounted coaxially therein and rotatable independently of the drum (T), wherein the drum (T) and the rotating body (D) form the chamber walls (4a, 4b) of the mixing chamber (3) which are rotatable relative to each other.

10. Apparatus according to claim 11, **characterized in that** the drum (T) forms a cylindrical or conical drum wall facing the rotating body (D) and the rotating body (D) forms a cylindrical or conical rotating body wall facing the drum (T), wherein the drum wall and the rotating body wall form the relatively to each other rotatable chamber walls (4a, 4b) of the mixing chamber (3).

11. Apparatus according to one of the preceding claims, **characterized in that** the apparatus (1) has a discharge device (14) connected to the mixing chamber (3) for meat material (G) treated by the tool (2), and/or the apparatus (1) comprises at least one vacuum pump, being connected to the mixing chamber (3), by which a vacuum can be generated within the mixing chamber (3).

12. Reformed meat production plant (27) comprising at least one apparatus (1) according to one of the preceding claims and a filling station (30) at which the meat material (G), in particular pieces of meat, with protein breakdown, produced by means of the apparatus (1), can be filled into at least one mold (33) provided at the filling station (30) or can be portioned by means of a vacuumizer formed thereon.

13. Method for producing protein breakdown on meat material (G), wherein meat material (G) is fed to at least one mixing chamber (3), **characterized in that** opposite chamber walls (4a, 4b) of the mixing chamber (3) can be rotated and rotated relative to each other for exerting mechanical forces (K) on meat material (G) located therebetween.

14. Method according to claim 13, **characterized in that** the chamber walls (4a, 4b) can be rotated at least temporarily in opposite rotational directions (8a, 8b) and/or about a common vertical rotational axis (7).

15. Use of a mixing chamber (3) with opposite, rotatable chamber walls (4a, 4b) rotatable relative to each other for exerting a controlled, mechanical force input (K) on meat material (G) located therebetween in order to produce protein breakdown thereon.

## Revendications

1. Dispositif (1) comprenant au moins un outil (2) pour produire une digestion protéique sur de la viande (G), l'outil (2) formant une chambre de mélange (3) pour la viande (G), **caractérisé en ce que** la chambre de mélange (3) présente des parois de chambre (4a, 4b) opposées, pouvant être mises en rotation et pouvant tourner l'une par rapport à l'autre pour contrôler des forces (K) exercées sur de la viande (G) se trouvant entre elles.

2. Dispositif selon la revendication 1, **caractérisé en ce que** la chambre de mélange (3) présente des parois de chambre (4a, 4b) pouvant tourner coaxialement l'une par rapport à l'autre.

3. Dispositif selon la revendication 2, **caractérisé en ce que** les parois de chambre (4a, 4b) peuvent tourner l'une par rapport à l'autre autour d'un axe de rotation vertical commun (7) et/ou **en ce que** le dispositif (1) présente deux moteurs électriques séparés (5a, 5b) pour entraîner les parois de chambre (4a, 4b).

4. Dispositif selon l'une des revendications précédentes, **caractérisé en ce que** les parois de la chambre (4a, 4b) peuvent être mises en rotation à des vitesses différentes et/ou dans des sens de rotation opposés (8a, 8b).

5. Dispositif selon l'une des revendications précédentes, **caractérisé en ce que** les parois (4a, 4b) de la chambre de mélange (3) sont au moins partiellement coniques et/ou cylindriques.

6. Dispositif selon l'une des revendications précédentes, **caractérisé en ce qu'**au moins l'une des parois de chambre (4a, 4b) peut tourner l'une par rapport à l'autre présente une chicane (9) pour le produit carné (G) et/ou les parois de chambre (4a, 4b) peuvent tourner l'une par rapport à l'autre présentent des surfaces (4a', 4b') hélicoïdales tournées l'une vers l'autre au moins par zones.

7. Dispositif selon l'une des revendications précédentes, **caractérisé en ce que** le dispositif (1) comprend un dispositif d'amenée (10) pour amener de la viande (G) dans la chambre de mélange (3) et/ou un récipient de réception (21) pour viande (G), à partir duquel la viande (G) peut être amenée dans la chambre de mélange (3).

8. Dispositif selon l'une des revendications précédentes, **caractérisé en ce que** la chambre de mélange (3) comprend à la fois une ouverture d'alimentation pour le produit carné (G) et une ouverture d'évacuation (13) pour le produit carné (G) avec décomposition des protéines, réalisée séparément de la précédente.

9. Dispositif selon l'une des revendications précédentes, **caractérisé en ce que** l'outil (2) présente un tambour rotatif (T) et un corps rotatif (D) monté coaxialement dans celui-ci et pouvant tourner séparément du tambour (T), le tambour (T) et le corps rotatif (D) formant les parois de chambre (4a, 4b) de la chambre de mélange (3) pouvant tourner l'une par rapport à l'autre.

10. Dispositif selon la revendication 9, **caractérisé en ce que** le tambour (T) forme une paroi de tambour cylindrique ou conique tournée vers le corps rotatif (D) et le corps rotatif (D) forme une paroi de corps rotatif cylindrique ou conique tournée vers le tambour (T), la paroi de tambour et la paroi de corps rotatif formant les parois de chambre (4a, 4b) de la chambre de mélange (3) pouvant tourner l'une par rapport à l'autre.

11. Dispositif selon l'une des revendications précédentes, **caractérisé en ce que** le dispositif (1) présente un dispositif d'évacuation (14) relié à la chambre de mélange (3) pour le produit carné (G) traité au moyen de l'outil (2) et/ou **en ce que** le dispositif (1) présente au moins une pompe à vide reliée à la chambre de mélange (3), à l'aide de laquelle un vide peut être généré à l'intérieur de la chambre de mélange (3).

12. Installation de production de viande reconstituée (27), comprenant au moins un dispositif (1) selon l'une des revendications précédentes ainsi qu'un poste de remplissage (30), au niveau duquel le produit carné (G), en particulier des morceaux de viande, produit au moyen du dispositif (1) avec décomposition des protéines, peut être rempli dans au moins un moule (33) mis à disposition au niveau du poste de remplissage (30) ou peut être découpé en portions au moyen d'un appareil de mise sous vide réalisé sur celui-ci.

13. Procédé pour produire une désagrégation des protéines sur des produits carnés (G), les produits carnés (G) étant amenés à au moins une chambre de mélange (3), **caractérisé en ce que** des parois de chambre opposées (4a, 4b) de la chambre de mélange (3) peuvent être mises en rotation et tourner l'une par rapport à l'autre pour exercer des forces mécaniques (K) sur des produits carnés (G) se trouvant entre elles.

14. Procédé selon la revendication 13, **caractérisé en ce que** les parois de la chambre (4a, 4b) peuvent être mises en rotation au moins temporairement dans des sens de rotation opposés (8a, 8b) et/ou autour d'un axe de rotation vertical commun (7).

15. Utilisation d'une chambre de mélange (3) avec des parois de chambre (4a, 4b) opposées, pouvant être mises en rotation et pouvant tourner l'une par rapport à l'autre, pour exercer un apport de force mécanique contrôlé (K) sur un produit carné (G) se trouvant entre elles, afin de produire sur celui-ci une digestion des protéines.
